# EUROPEAN PATENT SPECIFICATION

(11) **EP 4 323 130 B1**
(45) Date of publication and mention of the grant of the patent: **19.11.2025**
(21) Application number: 22717432.3
(22) Date of filing: 04.04.2022
(51) Int. Cl.: B21D 22/02, B21D 22/20, B21D 51/50, B21D 35/00, B65D 51/22

(54) **METHOD FOR MANUFACTURING A CAPSULE MADE OF ALUMINUM FOR SMALL TUBES WITH SEAL AND PRODUCT OBTAINED THEREFROM**
VERFAHREN ZUR HERSTELLUNG EINER KAPSEL AUS ALUMINIUM FÜR KLEINE ROHRE MIT DICHTUNG UND DARAUS HERGESTELLTES PRODUKT
PROCÉDÉ DE FABRICATION D'UNE CAPSULE EN ALUMINIUM POUR PETITS TUBES AVEC JOINT ET PRODUIT OBTENU À PARTIR DE CELUI-CI

(30) Priority: 15.04.2021 IT 202100009479
(43) Date of publication of application: 21.02.2024
(73) Proprietor: D.B.N. Tubetti S.r.l., 00042 Anzio (RM) (IT)
(72) Inventor: MATTIOLI, Maurizio, 00042 Anzio (RM) (IT)
(74) Representative: Fiammenghi, Eva
(86) International application number: PCT/IB2022/053101
(87) International publication number: WO 2022/219452

(56) References cited:
- EP-B1- 0 865 389
- DE-U1- 20 104 517
- FR-A- 788 448
- FR-A- 989 543
- US-A- 4 823 537
- US-B2- 7 370 507

## Description

### Technical Field

The invention relates to an innovative method for manufacturing capsules made of aluminum suited to seal common small tubes made of aluminum, thereby ensuring the complete eco-sustainability of the packaging, which can be recycled in its entirety due to being made of aluminum only. Said aluminum-made capsules also include a piercing/breakage pyramid for creating a hole in the warranty/security seal of the small tubes.

### Background art

In the food packaging industry, and beyond, packages made of small tubes are more and more widespread. These packages allow to stow the materials to be commercialized within particular small aluminum-made tubes, which are closed by means of specific seals, gaskets and capsules.

Packaging these products inside small aluminum tubes allows the seller to comply with all rules of hygiene and product preservation, by noticeably reducing costs due to purchasing various materials and machines suited to sanitize or to apply an artificial protective gas.

On the other hand, on the client side, the fact that the products to be eaten/consumed originate from small tubes leads to a waste reduction and promotes an optimum preservation of the product during transportation, avoiding any infiltration from the outside.

The aluminum used to produce these small tubes is also recyclable, this being the most important advantage for the packaging field.

However, to date the problem still unsolved is the closing method of said small aluminum tubes. Actually, small plastic-made capsules are utilized but they cannot be recycled together with the small tube since they are not of the same material.

Given their shapes, these plastic-made capsules are easy to mold, but they don't consider the needs of a more a more environment friendly market.

Each plastic-made capsule may easily be provided with a breakage or piercing pyramid suited to open a small tube closed by an aluminum membrane. However, plastic-made capsules commonly used today have additional drawbacks, among others a poor resistance to high temperature.

Should the need arise to package a product at temperatures higher than 100°C, any plastic-made capsule will imply a risk of dispersion of small fragments that will pollute the packaged product. For this reason, it will be necessary to prefer cold packaging processes, thereby affecting the market.

Among the already filed/granted patent applications, such as US4893718, there do not exist solutions to these problems other than a technique for separating the package into various parts before its recycling.

Therefore, an object of the present invention is to solve the above problems by means of a method for manufacturing capsules made of aluminum, which are suited to hermetically close the usual small tubes with seal, and including, therefore, an internal breakage pyramid.

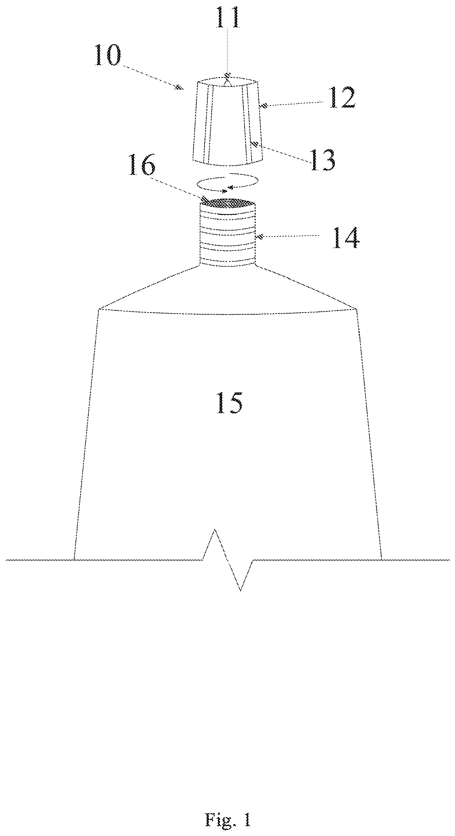

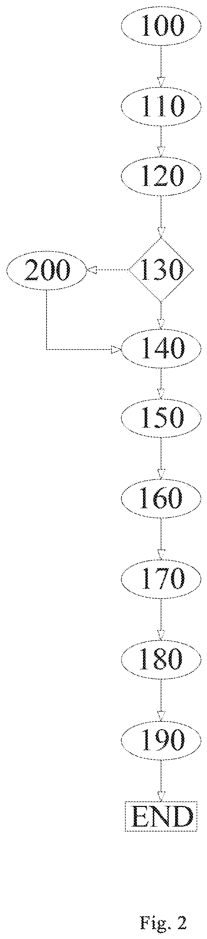

US 7,370,507 B2 discloses a lugged cap forming system used to obtain aluminum caps. A typical such cap is shown in Figs. 1 and 2 of US 7,370,507 B2. There, no breakage pyramid is formed on the cap by the two-station progressive tooling described in this document. The progressive molding method of US 7,370,507 B2 includes a step for the formation of a curl (outward curled rim) on the bottom edge of the cap, during the up stroke of the blank punch. In a second station lugs are formed into the cap rim.

FR 788 448 discloses a small tube having a cap with a conical tip used for breaking a tube seal (diaphragm, membrane) of a tube opening. The base of the conical tip has the same cross-sectional area as the tube opening. The conical tip may be made of metal or synthetic resins. The conical tip is preferably integrally formed on the cap. This document does not describe the production method and is silent about any use of progressive molding starting from an aluminum foil/sheet. From the overall design of the cap, from the description and from the figures of this document, it cannot be inferred that such a method is employed.

### Description of the invention

According to the present invention there is provided a method for manufacturing a capsule made of aluminum for small tubes with seal, which reliably solves the above problems.

The present manufacturing method provides an innovative type of capsules made of aluminum suited to seal small tubes, which comprise a security seal formed by a membrane made of aluminum. Said membrane is suited to maintain a sealed condition for the hole of the small tube, until the user decides to make use of the product contained in its interior.

When opening the membrane, one is obliged to use the breakage pyramid, which normally lies on the exterior of said capsule. The present invention is innovative in that it permits to realize a capsule, provided with a breakage pyramid, made of aluminum, so as to render the entire package completely recyclable.

The capsule in question comprises a cylindrical body suited to confer rigidity to the capsule by means of appropriately sized cylindrical walls apt to resist to transportation and to multiple operations of opening and closing.

In one embodiment, said external walls are slightly tilted, in order to increase the sealing effectiveness of the capsule, which takes a conical shape.

In order to increase the adherence of the capsule, during its screwing and unscrewing, grooves are obtained along its external walls. In one embodiment, said adherence is increased by means of high relief sandblasting.

In order to permit the screwing/tightening and unscrewing of the capsule on the tube nozzle, it is necessary to engrave a thread on its interior, which will increase the sealing effectiveness of the whole package.

A breakage pyramid is also included in the innovative capsule, in order to pierce/perforate the security seal of the small tube. Said pyramid is obtained by means of a progression molding process included in the present method of manufacturing.

Said method starts with a preliminary study of the physical properties of the aluminum to be treated, analyzing its elasticity as well as its resistance to heat and deformation.

Then, an analysis of the material is carried out by subjecting it to laser reading, to ensure that the dimensions of the aluminum sheet are adequate for the progression molding process.

The aluminum sheet is stretched/extended within a die suited to keep said aluminum sheet in place during the molding steps.

The molding of the capsule equipped with the breakage pyramid occurs by means of the use of a progression mold which, through a plurality of passages, is adapted to sculpt and model said aluminum sheet up to reaching the desired shape, obtaining a capsule comprising on its external side a breakage pyramid adapted to perforate the aluminum membrane that constitutes the security seal of the small tube. A further working step is required for engraving the thread in the interior of the capsules, by using an external machine, only for illustrative and non-limitative purposes.

Then, the modeled capsules are removed from the remains of the aluminum sheet that was left intact during the progression molding.

A quality control is carried out randomly on one of said molded capsules.

Cleaning of the molded capsules occurs by means of air jet, supplied by a compressor, adapted to remove every impurity and residues of the molding. In one embodiment, said cleaning occurs by means of hydrojet.

Thereafter, painting of the capsules occurs by means of a painting step in line with the type of product packaged within the small tube; for instance, the shade of color may be chosen by the marketing department of the selling company.

Drying of the capsules is performed in a dry and ventilated environment.

Finally said capsules are stored, awaiting use on the new small tubes.

In one of its variants, the molding includes at least five steps of modeling said capsule, starting with a common aluminum sheet.

An aluminum sheet is extended within a progression mold.

In the first molding, a cavity is obtained in the central part of said aluminum sheet, said cavity being said breakage pyramid 11.

In the second molding, the external ends of the sheet are maintained in position while the central part is thrust downward, while preserving unaltered the breakage pyramid 11.

The third molding, instead, lowers the external ends of the sheet, and comes to create the cylindrical body of the capsule.

Finally, a fourth molding, by means of a tool inserted in the progression molding machine, creates/imparts a thread within the capsule, thereby rendering the latter complete and ready to seal any kind of small tube with seal.

The advantages offered by the present invention are clear in the light of the description provided up to now, and they will be even clearer thanks to the annexed drawings and the detailed description.

### Description of Drawings

The invention will be described below according to at least one of its preferred embodiments, only for illustrative and non-limitative purposes, with the support of the annexed figures, in which:
FIGURE 1 shows an external view of the package formed by the small tube 15 and the capsule 10 made of aluminum. The small tube 15 is usually made of aluminum and comprises a nozzle 14 whereon a membrane is applied which is suited to act as a warranty seal 16. This seal 16 is further suited to preserve the products stored at very high temperatures in the interior of the small tube 15. Despite being made of aluminum, the capsule 10 includes a breakage pyramid 11 on its upper external side.
FIGURE 2 shows a flowchart in conformity with the method of the present invention, which is linked to the product obtained therefrom;

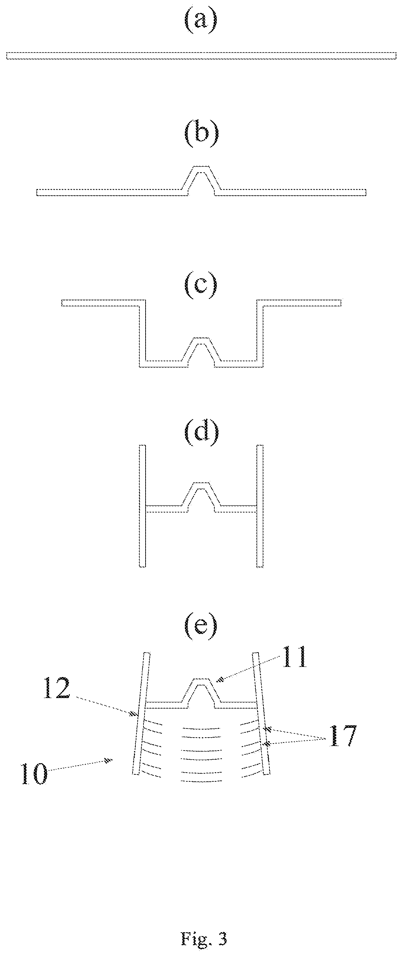

FIGURE 3 specifically shows the steps occurring during progression molding. It should be noted that in the last step (e) the capsule 10 takes shape starting from a common aluminum sheet, thereby obtaining a cylindrical body 12 suited to confer rigidity to the whole structure of the capsule 10. A thread 17 is etched interiorly to promote a retention effect of the capsule 10 on the nozzle 14. Further, a breakage pyramid 11 is present at the upper end of the capsule 10, for the purpose of piercing the warranty or security seal 16, which is formed by the membrane closing the hole of the nozzle 14.

### Detailed Description of the Invention

The present invention will now be described for purely illustrative and non-limitative or non-binding purposes with reference to the Figures which show some of the embodiments of the present inventive concept.

Referring to FIG. 1, it shows a generic composition of a sealing system of an usual small tube 15 with seal 16, whose closure is an aluminum capsule 10.

Said capsule 10 comprises a breakage or piercing pyramid 11 on its external upper side, suited to pierce the security seal 16 formed by a metallic membrane present on the hole of the nozzle 14, which belongs to the small tube 15 in question.

A plurality of grooves 13 are formed/etched on the cylindrical body 12 of said capsule, in order to provide a greater adherence during screwing and unscrewing.

Referring to FIG. 2, it shows the flowchart of the method which permits to obtain said capsule 10 of aluminum for small tubes 15 with seal 16, including the steps of:
- study 100 of the physical properties of treated aluminum, by means of analysis of elasticity and heat and deformation resistance;
- analysis 110 of the treated material by means of laser reading in order to ensure that the dimensions of the aluminum sheet are adapted for the progression molding process;
- extending 120 an aluminum sheet, engaging it within a die adapted to maintain it in position during the molding steps;
- molding 130 of the capsule 100 equipped with breakage pyramid 11, by means of the use of a progression mold which, through a plurality of passages, is adapted to sculpt and model said aluminum sheet up to reaching the desired shape, obtaining a capsule 10 comprising on its external side a breakage pyramid 11 adapted to perforate the aluminum membrane that constitutes the security seal 16 of the small tube 15;
- removal 140 of the modeled capsules 10, from the remains of the aluminum sheet that was left intact during the progression molding;
- quality control 150, carried out randomly on one of the molded capsules 10;
- cleaning 160 of the molded capsules 10, by means of air jet, supplied by a compressor, adapted to remove every impurity and residues of the molding;
- painting 170 of the capsules 10 by means of painting, in line with the type of product packaged within the small tube 15;
- drying 180 of the capsules 10 in dry and ventilated environment;
- storage 190 of said capsules 10, awaiting use on the new small tubes 15.

Referring to FIG. 3, it shows a variant of the molding process 130 which comprises at least five steps for modeling said capsule 10 starting from a common aluminum sheet, said steps including:
- extending (a) an aluminum sheet within a progression mold;
- first molding (b) carried out in the central part of said aluminum sheet, said cavity being adapted to allow/form that which will be subsequently defined as breakage pyramid 11;
- second molding (c), wherein the external ends of the sheet are maintained in position while the central part is thrust downward;
- third molding (d), in which the external ends of the sheet, previously fixed and still horizontal, are lowered and come to create the cylindrical body 12 of the capsule 10;
- fourth molding (e); by means of a tool inserted in the progression molding machine a thread 17 is etched/imparted within the capsule 10, so as to render the latter complete and ready to seal any small tube 15 with seal 16.

Lastly, it is clear that modifications may be made to the invention as described above, or additions or variants obvious for a skilled person, without departing from its scope as defined by the appended claims.

## Claims

1. Method for manufacturing a capsule (10) made of aluminum for small tubes (15) with seal (16) adapted to make a capsule (10) entirely made of aluminum, equipped with breakage pyramid (11) adapted to perforate a security seal (16) made of aluminum, present on the hole of the small tube (15); said method comprising the steps of:
- study (100) of the physical properties of treated aluminum, by means of analysis of elasticity and heat and deformation resistance;
- analysis (110) of the treated material by means of laser reading in order to ensure that the dimensions of the aluminum sheet are adapted for the progression molding process;
- extending (120) an aluminum sheet, engaging it within a die adapted to maintain it in position during the molding steps;
- molding (130) of the capsule (10) equipped with breakage pyramid (11), by means of the use of a progression mold which, through a plurality of passages, is adapted to sculpt and model said aluminum sheet up to reaching the desired shape, obtaining a capsule (10) comprising a breakage pyramid (11) adapted to perforate the aluminum membrane that constitutes the security seal (16) of the small tube (15);
- removal (140) of the modeled capsules (10), from the remains of the aluminum sheet that was left intact during the progression molding;
- quality control (150), carried out randomly on several of the molded capsules (10);
- cleaning (160) of the molded capsules (10), by means of air jet, supplied by a compressor, adapted to remove every impurity and residues of the molding;
- painting (170) of the capsules (10) by means of painting, in line with the type of product packaged within the small tube (15);
- drying (180) of the capsules (10) in dry and ventilated environment;
- storage (190) of said capsules (10), awaiting use on the new small tubes (15).

2. Method for manufacturing a capsule (10) made of aluminum for small tubes (15) with seal (16), according to the preceding claim 1, **characterized in that** a thread (17) is imparted (200) within the cylindrical body (12) of the capsule (10) by a further machine, outside said progression mold.

3. Method for manufacturing a capsule (10) made of aluminum for small tubes (15) with seal (16), according to any one of the preceding claims, **characterized in that** said cleaning of the manufactured capsules (10) is carried out by means of a water jet adapted to wash the capsules (10), removing every residual impurity.

4. Method for manufacturing a capsule (10) made of aluminum for small tubes (15) with seal (16), according to any one of the preceding claims, **characterized in that** said mold (130) comprises at least five passages for modeling said capsule (10) starting from a common aluminum sheet; said passages comprise:
- extending (a) an aluminum sheet within a progression mold;
- first molding (b) carried out in the central part of said aluminum sheet, said cavity being adapted to allow that which will be subsequently defined as breakage pyramid (11);
- second molding (c), wherein the external ends of the sheet are maintained in position while the central part is thrust downward;
- third molding (d), in which the external ends of the sheet, previously fixed and still horizontal, are lowered and come to create the cylindrical body (12) of the capsule (10);
- fourth molding (e), by means of a tool inserted in the progression molding machine, a thread (17) is imparted within the capsule (10).

## Patentansprüche

1. Verfahren zum Herstellen einer Kapsel (10) aus Aluminium für kleine Rohre (15) mit Dichtung (16), das dazu geeignet ist, eine vollständig aus Aluminium bestehende Kapsel (10) herzustellen, die mit einer Bruchpyramide (11) versehen ist, die dazu geeignet ist, eine an der Öffnung des kleinen Rohrs (15) vorhandene Sicherheitsdichtung (16) aus Aluminium zu perforieren; wobei das Verfahren die folgenden Schritte aufweist:
- Untersuchen (100) der physikalischen Eigenschaften von behandeltem Aluminium durch Analyse der Elastizität und der Wärme- und Verformungsbeständigkeit;
- Analyse (110) des behandelten Materials durch Laserabtasten, um sicherzustellen, dass die Abmessungen des Aluminiumblechs für den Progressionsformungsprozess geeignet sind;
- Dehnen (120) eines Aluminiumblechs, Einlegen desselben in eine Form, die dazu geeignet ist, es während der Formungsschritte in Position zu halten;
- Formen (130) der mit einer Bruchpyramide (11) versehenen Kapsel (10) durch Verwendung einer Progressionsform, die, durch mehrere Schritte, dazu geeignet ist, das Aluminiumblech so zu formen und zu modellieren, bis die gewünschte Form erreicht ist, wodurch eine Kapsel (10) erhalten wird, die eine Bruchpyramide (11) aufweist, die dazu geeignet ist, die Aluminiummembran, die die Sicherheitsdichtung (16) des kleinen Rohrs (15) bildet, zu perforieren;
- Entfernen (140) der geformten Kapseln (10) von den Resten des Aluminiumblechs, das während des progressiven Formens intakt geblieben ist;
- Qualitätssteuerung (150), die stichprobenartig an mehreren der geformten Kapseln (10) durchgeführt wird;
- Reinigen (160) der geformten Kapseln (10) durch einen von einem Kompressor gelieferten Luftstrahl, der dazu geeignet ist, alle Verunreinigungen und Rückstände des Formens zu entfernen;
- Lackieren (170) der Kapseln (10) durch Lackieren entsprechend der Art des in dem kleinen Rohr (15) verpackten Produkts;
- Trocknen (180) der Kapseln (10) in einer trockenen und belüfteten Umgebung;
- Lagerung (190) der Kapseln (10) unter Abwarten der Verwendung auf den neuen kleinen Rohren (15).

2. Verfahren zum Herstellen einer Kapsel (10) aus Aluminium für kleine Rohre (15) mit Dichtung (16) gemäß dem vorstehenden Anspruch 1, **dadurch gekennzeichnet, dass** ein Gewinde (17) innerhalb des zylindrischen Körpers (12) der Kapsel (10) durch eine weitere Maschine außerhalb der Progressionsform angebracht wird (200).

3. Verfahren zum Herstellen einer Kapsel (10) aus Aluminium für kleine Rohre (15) mit Dichtung (16) gemäß einem der vorstehenden Ansprüche, **dadurch gekennzeichnet, dass** das Reinigen der hergestellten Kapseln (10) mittels eines Wasserstrahls, der dazu geeignet ist, die Kapseln (10) zu waschen und dabei alle verbleibenden Verunreinigungen zu entfernen, ausgeführt wird.

4. Verfahren zum Herstellen einer Kapsel (10) aus Aluminium für kleine Rohre (15) mit Dichtung (16) gemäß einem der vorstehenden Ansprüche, **dadurch gekennzeichnet, dass** das Formen (130), ausgehend von einem üblichen Aluminiumblech, zumindest fünf Schritte zum Formen der Kapsel (10) aufweist; wobei die Schritte aufweisen:
- Dehnen (a) eines Aluminiumblechs innerhalb einer Progressionsform;
- erstes Formen (b), das im mittleren Teil des Aluminiumblechs durchgeführt wird, wobei der Hohlraum dazu geeignet ist, das, was später als Bruchpyramide (11) definiert wird, zu ermöglichen;
- zweites Formen (c), bei dem die äußeren Enden des Blechs in Position gehalten werden, während der mittlere Teil nach unten geschoben wird;
- drittes Formen (d), bei dem die zuvor befestigten und noch horizontalen äußeren Enden des Blechs abgesenkt werden und den zylindrischen Körper (12) der Kapsel (10) bilden;
- viertes Formen (e) eines Gewindes (17), das innerhalb der Kapsel (10) vorgesehen wird, mittels eines in die Progressionsformungsmaschine eingesetzten Werkzeugs.

## Revendications

1. Procédé de fabrication d'une capsule (10) en aluminium pour de petits tubes (15) avec sceau (16) adapté pour réaliser une capsule (10) entièrement en aluminium, équipée d'une pyramide de rupture (11) adaptée pour perforer un sceau de sécurité (16) en aluminium, présent sur l'orifice du petit tube (15) ; ledit procédé comprenant les étapes suivantes :
- l'étude (100) des propriétés physiques de l'aluminium traité, au moyen d'une analyse de l'élasticité et de la résistance à la chaleur et à la déformation ;
- l'analyse (110) du matériau traité au moyen d'une lecture laser afin de s'assurer que les dimensions de la feuille d'aluminium sont adaptées au processus de moulage par progression ;
- l'extension (120) d'une feuille d'aluminium, l'engageant à l'intérieur d'une matrice adaptée pour la maintenir en position pendant les étapes de moulage ;
- le moulage (130) de la capsule (10) équipée d'une pyramide de rupture (11), au moyen de l'utilisation d'un moule de progression qui, à travers une pluralité de passages, est adapté pour sculpter et modeler ladite feuille d'aluminium jusqu'à atteindre la forme souhaitée, obtenant une capsule (10) comprenant une pyramide de rupture (11) adaptée pour perforer la membrane d'aluminium qui constitue le sceau de sécurité (16) du petit tube (15) ;
- le retrait (140) des capsules (10) modelées, des restes de la feuille d'aluminium qui a été laissée intacte pendant le moulage par progression ;
- le contrôle de qualité (150), effectué de manière aléatoire sur plusieurs des capsules (10) moulées ;
- le nettoyage (160) des capsules (10) moulées, au moyen d'un jet d'air, fourni par un compresseur, adapté pour éliminer toute impureté et tout résidu du moulage ;
- le fait de peindre (170) les capsules (10) au moyen d'une peinture, conformément au type de produit emballé à l'intérieur du petit tube (15) ;
- le séchage (180) des capsules (10) dans un environnement sec et ventilé ;
- le stockage (190) desdites capsules (10), en attente d'utilisation sur les nouveaux petits tubes (15).

2. Procédé de fabrication d'une capsule (10) en aluminium pour petits tubes (15) avec sceau (16), selon la revendication 1 précédente, **caractérisé en ce qu'**un filetage (17) est produit (200) à l'intérieur du corps cylindrique (12) de la capsule (10) par une autre machine, à l'extérieur dudit moule de progression.

3. Procédé de fabrication d'une capsule (10) en aluminium pour petits tubes (15) avec sceau (16), selon l'une des revendications précédentes, **caractérisé en ce que** ledit nettoyage des capsules (10) fabriquées est effectué au moyen d'un jet d'eau adapté pour laver les capsules (10), en éliminant toute impureté résiduelle.

4. Procédé de fabrication d'une capsule (10) en aluminium pour petits tubes (15) avec sceau (16), selon l'une des revendications précédentes, **caractérisé en ce que** ledit moule (130) comprend au moins cinq passages pour modeler ladite capsule (10) à partir d'une feuille d'aluminium commune ; lesdits passages comprennent :
- l'extension (a) d'une feuille d'aluminium à l'intérieur d'un moule de progression ;
- un premier moulage (b) effectué dans la partie centrale de ladite feuille d'aluminium, ladite cavité étant adaptée pour permettre celle qui sera ensuite définie comme pyramide de rupture (11) ;
- un deuxième moulage (c), dans lequel les extrémités externes de la feuille sont maintenues en position pendant que la partie centrale est poussée vers le bas ;
- un troisième moulage (d), dans lequel les extrémités externes de la feuille, préalablement fixées et toujours horizontales, sont abaissées et viennent créer le corps cylindrique (12) de la capsule (10) ;
- un quatrième moulage (e), au moyen d'un outil inséré dans la machine de moulage par progression, un filetage (17) est produit à l'intérieur de la capsule (10).
